# FASCICULE DE BREVET EUROPEEN

(11) **EP 3 794 538 B1**
(45) Date de publication et mention de la délivrance du brevet: **16.08.2023**
(21) Numéro de dépôt: 19722638.4
(22) Date de dépôt: 13.05.2019
(51) Int. Cl.: G06Q 20/40, G06F 21/32, G06Q 20/34

(54) **PROCÉDÉ ET SYSTÈME D'ENROLEMENT AUTONOME POUR DÉTENTEUR DE DISPOSITIF BIOMETRIQUE**
AUTONOMES ERFASSUNGSVERFAHREN UND -SYSTEM FÜR INHABER EINER BIOMETRISCHEN VORRICHTUNG
METHOD AND SYSTEM OF AUTONOMOUS ENROLMENT FOR BIOMETRIC DEVICE HOLDER

(30) Priorité: 15.05.2018 EP 18305594
(43) Date de publication de la demande: 24.03.2021
(73) Titulaire: Thales Dis France SAS, 92190 Meudon (FR)
(72) Inventeur: SOUCHON, Pierre, 13881 Gémenos Cedex (FR); LELOUP, Laurent, 13881 Gémenos Cedex (FR); MARTINEZ, Frédéric, 13881 Gémenos Cedex (FR)
(74) Mandataire: Milharo, Emilien
(86) Numéro de dépôt international: PCT/EP2019/062155
(87) Numéro de publication internationale: WO 2019/219575

(56) Documents cités:
- WO-A1-2017/191211
- US-A1- 2014 052 630
- US-A1- 2016 087 962
- US-A1- 2017 300 680

## Description

### Domaine de l'invention.

L'invention concerne un procédé et système d'enrôlement autonome pour détenteur de dispositif biométrique.

L'invention concerne les dispositifs biométriques incluant plus particulièrement les cartes à puce munies de capteurs d'empreinte. Les puces portées dans de telles cartes, peuvent être configurées avec une interface de communication à contacts ISO 7816 pour communiquer avec un lecteur à contacts électriques et / ou d'une antenne pour communiquer avec des lecteurs en mode sans contact. En outre, elles peuvent avoir au moins une autre interface pour communiquer avec d'autres composants périphériques internes tels que des capteurs (capteur d'empreinte, afficheur, mémoires de masse, horloge de temps réel).

L'invention concerne également des produits ou dispositifs électroniques qui utilisent des éléments de sécurité biométriques par exemple, des clés USB, des montres, des bracelets, des objets à porter (Wearables en anglais).

### Art antérieur.

Les cartes à capteur biométrique représentent une nouvelle génération de cartes de paiement, générant de fortes attentes des utilisateurs (porteurs, titulaires ou détenteurs) de cartes et l'intérêt des banques.

Cet intérêt s'explique par le côté pratique de telles cartes (pas besoin de mémoriser un code PIN) et de la sécurité qu'elles apportent grâce au capteur d'empreintes digitales intégré dans la carte et utilisé pour authentifier le titulaire / utilisateur de la carte.

Cependant, une des étapes critiques de l'expérience utilisateur est le processus d'inscription / enrôlement consistant à collecter un modèle de référence pour les empreintes digitales du détenteur de la carte et de mémoriser ce modèle de référence dans la carte pour la personnaliser.

Le présent demandeur propose actuellement une tablette biométrique comprenant un lecteur d'empreintes digitales et un lecteur de carte à puce, pour faire un enrôlement complet et finalisé dans des succursales de banque. Cependant, cette solution n'est pas suffisante dans la mesure où la plupart des banques expriment clairement la nécessité d'obtenir une solution permettant à leurs clients de faire un auto-enrôlement de leurs empreintes digitales en raison de la diminution du nombre de succursales de banques ou du nombre de personnes se déplaçant dans ces succursales.

On connaît également une méthode concurrente consistant à effectuer un enrôlement à l'aide d'un téléphone portable intelligent (smartphone) et une carte biométrique à batterie. Cependant, cette solution a une contrainte forte car elle nécessite une batterie dans la carte et ajoute l'inconvénient de la durée de vie de la batterie.

On connaît également (pour être proposé par le demandeur) un enrôlement à l'aide d'un lecteur de carte que l'on connecte (via USB ou Bluetooth) à une unité de traitement informatique (ordinateur, téléphone intelligent ou assistant personnel) pour authentifier l'utilisateur. Cela requiert une application logicielle spécifique à installer dans l'ordinateur et/ou un appairage /jumelage entre le dispositif biométrique et l'ordinateur (ou téléphone) et l'obligation de suivre des instructions inhabituelles de l'application susvisée pour un enrôlement avec l'unité de traitement et la vérification de l'identité du possesseur du dispositif (via un code secret par exemple).

On connaît également des propositions d'enrôlement à la succursale locale de la banque à l'aide d'une tablette dédiée (ou un kiosque ou autre etc...) mais cela requiert un déplacement de l'utilisateur à un endroit prédéterminé.

On connaît également un dispositif « manchon » qui est en mesure d'aider à enregistrer les empreintes digitales de la personne. Essentiellement, le dispositif est sous forme d'un étui de carte, qui dispose d'une batterie intégrée. Une carte biométrique est insérée dans le manchon et la puissance est transmise à la carte.

La première fois, que le manchon est utilisé, une personne met le doigt sur le lecteur d'empreintes digitales trois fois et un enregistrement est effectué. Une empreinte digitale est stockée comme un modèle de nombres chiffrés, pas comme une image physique d'une empreinte digitale et le manchon ne se connecte en aucune manière à internet.

Ainsi, il est proposé un moyen permettant aux personnes d'enregistrer facilement et commodément leur empreinte digitale sur la carte biométrique confortablement à domicile.

Cependant, il n'est pas indiqué clairement et concrètement comment un tel dispositif peut fonctionner dans le détail. Il n'est pas indiqué si ce dispositif étui est spécifiquement configuré ni comment il serait configuré.

Ce dispositif semble simplement alimenter la carte en énergie, ce qui peut poser des problèmes notamment de sécurité.

Le document US2014/052630A1 décrit un processus d'enrôlement d'une donnée biométrique dans une carte. Le document WO 2017/191211A1 décrit un appareil contrôlé par empreinte digitale. Le document US2017/300680A1 décrit un procédé permettant d'autoriser l'enrôlement d'une donnée biométrique.

### Problème technique.

L'invention a pour objectif de résoudre les inconvénients susvisés.

L'invention vise à proposer une solution permettant à un titulaire de carte bancaire de s'enrôler plus facilement et/ou avec le moins possible de contraintes ou obligations (c'est-à-dire en lui procurant la meilleure expérience utilisateur possible).

L'invention vise à permettre un enrôlement transparent ou quasi-transparent pour l'utilisateur, avec de préférence, le moins possible de perte de temps et différent niveaux de sécurité possible.

### Résumé de l'invention.

Selon un premier aspect, l'invention résout ces problèmes selon un mode préféré, en permettant d'initier l'enrôlement en tout lieu, de préférence de manière autonome par l'utilisateur lui-même.

L'invention permet selon un second aspect également, cumulativement ou indépendamment du premier aspect ci-dessus, de finaliser / verrouiller un enrôlement initié au cours d'une session d'échange (transaction) préalable, que cette dernière ait été terminée dans le cas préféré ou non, de manière quasi transparente ou quasi habituelle pour l'utilisateur.

L'invention peut consister à séparer entres-elles les différentes étapes d'enrôlement, comprenant d'une part la mémorisation des données biométriques et d'autre part une finalisation (ou verrouillage / activation) sécurisée de ces données biométriques (la finalisation permettant de garantir l'appartenance des données au titulaire du dispositif de transaction effectuant la finalisation).

La finalisation sécurisée peut être effectuée en mode transparent pour l'utilisateur ou en temps masqué, par exemple à la première transaction standardisée dans laquelle il doit s'authentifier par exemple avec la saisie d'un code secret (PIN ou autre...) .

Ainsi, l'utilisateur ne perd pas de temps pour effectuer son enrôlement, ni pour se déplacer dans un lieu spécifique (agence de banque...). Il peut initier l'enrôlement à tout moment en tout lieu et/ou finaliser / verrouiller à tout moment et en tout lieu ou de manière transparente tout particulièrement et de préférence, au cours d'une authentification pour transaction standardisée.

Ainsi, l'invention permet d'accélérer / faciliter au moins une étape de l'enrôlement, soit au niveau de l'initiation et/ou soit au niveau de la finalisation (verrouillage ou activation). L'invention permet, le cas échéant, de dissocier / dé-corréler l'étape l'initiation de celle de finalisation, ces dernières pouvant être effectuées / réparties entre plusieurs lieux différents (domicile, agence, marchands) et/ou espacées dans le temps (plusieurs heures, voire plusieurs jours).

L'invention peut permettre également, le cas échéant, d'effectuer l'initiation (ou mémorisation) de données biométriques en une fois, deux fois ou plusieurs fois sur des lieux différents ou pendant des transactions différentes.

L'invention est définie par les revendications indépendantes. D'autres modes de réalisation de l'invention sont définis par les revendications dépendantes.

Ainsi, grâce à l'invention, l'utilisateur peut mémoriser de manière autonome son empreinte digitale sur une carte capteur biométrique, sans la nécessité d'aller vers un emplacement physique (comme une succursale de la banque), ou d'utiliser une unité de traitement connectée et une application logicielle avec instructions spécifiques inhabituelles.

Le connecteur est particulièrement simple à réaliser et économique, simplement par un branchement de ses plots partiellement différents de l'ISO 7816.

L'invention permet d'effectuer en toute tranquillité, en toute autonomie, la mémorisation (ou saisie) des données biométriques en dehors d'une agence, notamment au domicile, ou en tout lieu; L'invention permet également de finaliser (verrouiller) l'enrôlement ultérieurement, hors agence si possible, pendant ou à l'occasion d'une transaction normale, de préférence standardisée, pendant une procédure de transaction de routine ou habituelle pour l'utilisateur.

### Brève description des figures.

- Les figures 1A-1B illustrent un système d'initiation d'enrôlement avec une carte biométrique de transaction selon un mode préféré de réalisation de l'invention;
- Les figures 1C-1D illustrent des moyens électriques et logiciels pouvant contribuer à l'initiation de l'enrôlement ;
- La figure 2 illustre les microcontrôleurs (MCU et SE) de la carte avec les programmes applicatifs contenus dedans ainsi que les interactions (ou étapes de fonctionnement) quand l'enrôlement est non effectué et non activé ;
- La figure 3 est similaire à la figure précédente mais concerne un fonctionnement quand l'enrôlement (mémorisation) est effectué et non activé ;
- La figure 4 est similaire à la figure précédente mais concerne un fonctionnement quand l'enrôlement est effectué et activé ;
- La figure 5 illustre différentes étapes de l'initiation de l'enrôlement (mémorisation) d'empreintes digitales;
- La figure 6 illustre, selon un mode préféré, différentes étapes de la finalisation (verrouillage/ activation) une fois que des données biométriques ont été mémorisées et lors d'une transaction bancaire standardisée, telle que EMV;
- La figure 7 illustre une acquisition de sept empreintes qui sont juxtaposées (ou assemblées / combinées) en mémoire 25 du dispositif biométrique pour définir une empreinte de référence (recomposée à partir de plusieurs portions empreintes digitales).
- La figure 8 illustre (selon un mode un peu moins préféré) une activation des données biométriques mémorisées dans le dispositif, à l'aide d'un téléphone mobile NFC, éventuellement relié à un serveur et une base de données d'authentification.

### Description.

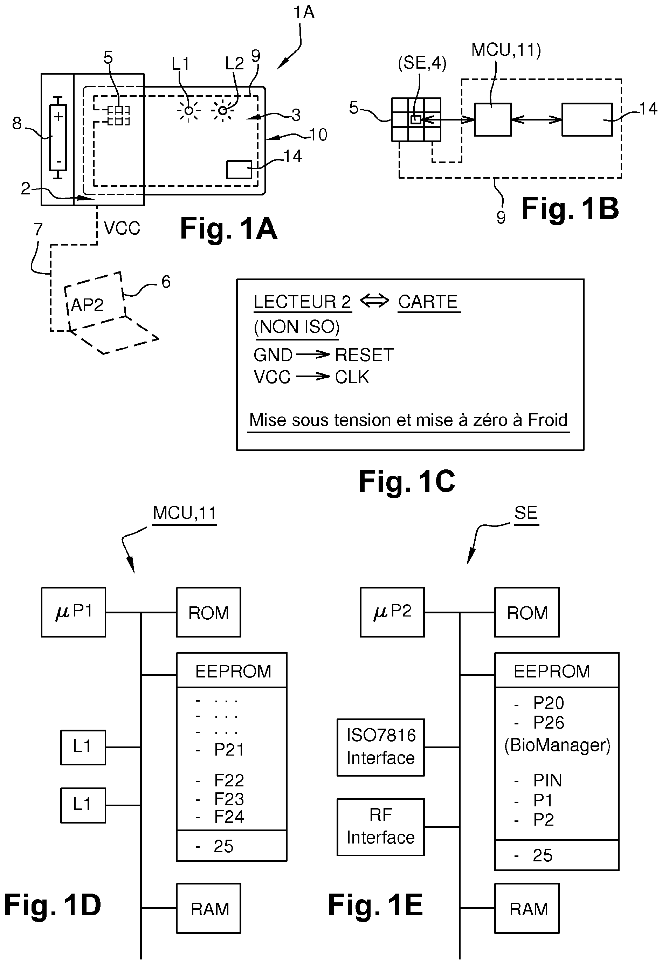

A la figure 1A est illustré un système 1A pour enrôler un titulaire de dispositif de transaction biométrique 3, selon un premier mode préféré de réalisation ou de mise en œuvre du procédé de l'invention.

Par transaction on entend de préférence une transaction électronique bancaire notamment standardisée EMV ou d'autres échanges électroniques entre un dispositif biométrique de transaction et l'extérieur [Terminal sur le lieu de vente (POS), distributeur de billets (ATM), bornes d'accès à un immeuble, à un service de transport, de paiement ...)]

Par motif biométrique, on entend des données biométriques propres à l'utilisateur, telles qu'un motif d'empreinte digitale, l'iris de l'œil, son ADN, sa voix, etc. Dans la présente description, le motif biométrique peut également équivaloir ou désigner indifféremment des minuties ou des empreintes ou plus généralement des données biométriques de toute nature.

Lorsque suffisamment de motifs (minuties ou empreintes) sont mémorisés, ils constituent ensemble un modèle de référence auquel on peut se référer pour s'authentifier par comparaison avec un autre motif fraîchement capturé avec un certain taux de similitude.

On peut désigner indifféremment le modèle de référence par motif (ou minuties ou empreintes) de référence. De même, les termes verrouillage, activation, validation, finalisation sont équivalents. Ils représentent une étape apportée par l'invention et réalisée dans différentes conditions ou environnements ou niveaux de sécurité.

Par dispositif de transaction, on entend un dispositif portable de communication tel qu'une carte à puce électronique 3, une montre à puce électronique, un bracelet électronique communiquant notamment via des contacts électriques 5 et/ou en sans-contact via une antenne 9 dans un corps 10 de carte, selon une technologie de champ proche (NFC) ou RFID (radio frequency identity Device en anglais), Bluetooth^{™} , ou UHF. Le dispositif biométrique peut également comporter ou constituer une clé USB, un téléphone portable intelligent, un ordinateur, une tablette, un assistant personnel PDA.

Ce système 1A est classiquement configuré pour effectuer une mémorisation d'au moins un motif biométrique N1-N7 dans une mémoire 25 ou registre du dispositif 3 via un capteur 14, ici un capteur d'empreinte digitale.

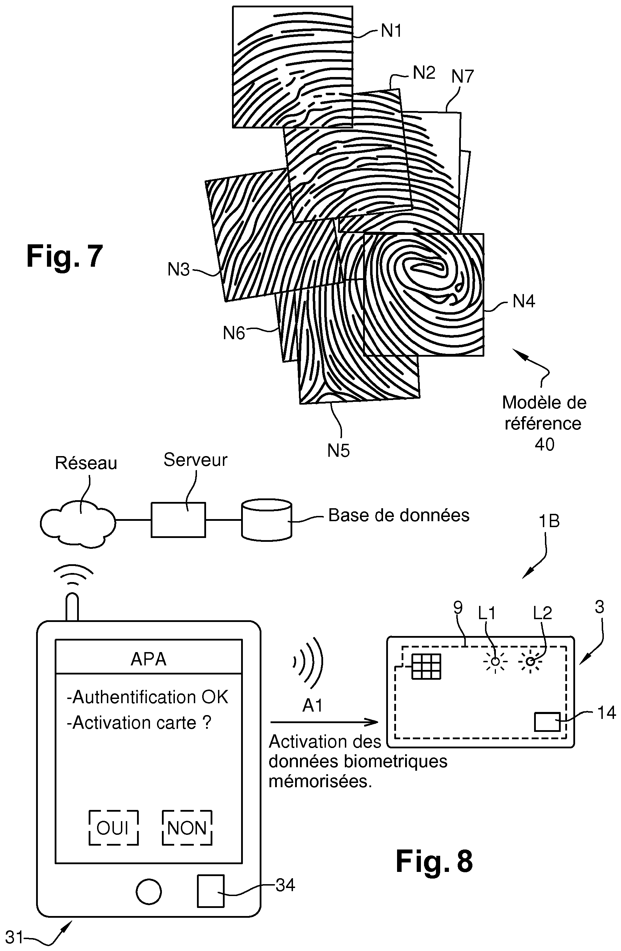

Selon un mode préféré du premier aspect de l'invention, le système 1A comporte un connecteur 2 d'alimentation portable, configuré pour déclencher la mémorisation d'au moins un motif biométrique N1-N7 (fig. 7) ou une série de plusieurs motifs biométriques jusqu'à former un modèle biométrique de référence 40 notamment par assemblage de portions d'empreinte.

Le connecteur 2 peut être équipé, de préférence, d'une source d'énergie propre autonome, avec une pile ou batterie 8 ou disposer d'un connecteur d'alimentation en énergie et ou de communication tel qu'un câble USB.

De préférence, le connecteur 2 comprend une configuration de branchement électrique interne de manière à brancher le pôle négatif de la batterie du dispositif sur le plot de masse (GND) du connecteur de carte du dispositif mais aussi parallèlement sur le plot RST ; Le cas échéant, le plot GND peut être relié aussi au plot I/O.

Ainsi, l'invention prévoit une configuration du connecteur 2 avec une polarité et/ou branchement des plots du connecteur 2 qui n'est pas totalement conforme à l'ISO 7816.

Le pôle positif de la batterie est branché à la fois sur le plot d'alimentation en énergie (VCC) du connecteur ISO 7816 du dispositif (Fig. 1C) mais également sur le plot (CLK) de connecteur du dispositif correspondant à la plage de contact (CLK) de carte. Cependant, l'invention peut prévoir également un moyen d'alimentation quelconque notamment sans-contact (ex : chargeur à induction, lecteur sans contact...), mais aussi des condensateurs dans le lecteur 2 et/ou dans le dispositif 3.

Le connecteur ou lecteur 2 n'a aucun mécanisme permettant d'envoyer un signal particulier à la carte. C'est juste son câblage interne qui est particulier. Et c'est la carte (du moins le système d'exploitation OS de la puce SE, 4 qui est configuré pour détecter ce câblage particulier de manière à déclencher le début de l'enrôlement.

Dans l'exemple, pour la puce P60 (SE de NXP utilisé pour les cartes), les inventeurs ont décidés de câbler les plots Vcc et CLK du connecteur 2 de carte à puce sur le « + » (Il est en effet plus simple de détecter le signal avec cette puce).

Par contre pour une autre puce SE, on pourrait effectuer le câblage des plots Vcc et RST du connecteur par exemple sur le pôle positif de la batterie (Cela peut dépendre du type de puce, on peut avoir plus de facilité selon la puce utilisée à détecter tel ou tel câblage particulier).

Ainsi, l'invention prévoit un connecteur de carte à puce avec des plots standards mais dont les branchements ou câblages internes assurent uniquement une correspondance standard du pôle positif de la batterie avec le plot VCC du connecteur et pôle négatif de la batterie avec le plot GND du connecteur. Les autres plots RST, I/O, CLK du connecteur 2 (standard sur la forme ou configuration ou position géométrique des plots) peuvent l'un et/ou l'autre être câblés distinctement de l'ISO 7816, notamment être câblés en parallèle avec l'un des plots VCC ou GND.

Selon un second aspect du mode préféré alternatif indépendant ou complémentaire au précédent ci-dessus, le système 1A, 1B, 3 est configuré pour effectuer une activation de préférence sécurisée d'au moins un motif biométrique en réponse ou en association à une authentification réussie du titulaire. De préférence, la validation s'effectue quand le modèle de référence 40 est constitué avec suffisamment de motifs ou données biométriques N1-N7.

Alternativement, de manière moins préférée mais possible, la carte peut comprendre une batterie (une batterie ou des condensateurs de faible encombrement et/ou rechargeables) au moins pour assurer une partie ou totalité de l'enrôlement comprenant au moins la mémorisation.

A cet effet ci-dessus, le dispositif peut comporter une diode LED ou autre indicateur pour indiquer à l'utilisateur quand un condensateur ou batterie est suffisamment chargée afin de capter et mémoriser des données biométriques. Si c'est une batterie primaire, on peut ajouter un bouton interrupteur. Si c'est une source d'énergie rechargeable, une diode LED indicateur peut convenir.

Le système 1A, 1B, 3 peut être de préférence, mais pas exclusivement, configuré pour effectuer une mémorisation totale (ou complète) de données biométriques N1-N7, suffisantes pour former un modèle de référence 40, lors d'une première session d'échange d'information avec le dispositif 3 (sans discontinuité dans cette première même session) et une activation sécurisée lors d'une seconde session d'échange d'information avec le dispositif distincte de la première session.

L'utilisateur peut être averti de préférence, par un signal du dispositif quand les données biométriques capturées / mémorisées sont complètes à l'enrôlement. Alternativement, quand plus de « n » motifs différents (2, 3 ou 5..) sont mémorisés, le dispositif 3 (ici carte) peut considérer à l'aide d'un compteur de saisie de motifs que c'est suffisant pour constituer un modèle de référence 40.

Ce système 1A, 1B, 3 peut comporter / ou mettre en œuvre également (décrit ultérieurement fig. 8) un second lecteur 31 (de préférence distinct du connecteur 2 et pouvant être un terminal POS, un Mobile NFC, un distributeur de billets ATM...) pour finaliser / activer au moins le modèle biométrique de référence 40.

Le système peut inclure éventuellement un serveur d'authentification distant adapté et/ou une carte 3 adaptée selon l'invention pour effectuer la finalisation ; ces moyens de finalisation ci-dessus sont configurés pour verrouiller / activer les données biométriques mémorisées, à l'aide d'un signal de validation reçu dans le dispositif 3 en réponse à une authentification du porteur.

Selon l'invention, le dispositif peut être configuré de manière à effectuer les étapes ci-après :
a) fourniture au titulaire d'un connecteur 2, 7 d'alimentation portable et mobile, configuré pour déclencher une mémorisation de données biométriques,
   - et/ou
b) activation d'au moins un motif biométrique, ladite activation étant effectuée en réponse ou en association à au moins une authentification réussie du titulaire.

(Le premier aspect visé précédemment peut comprendre au moins l'étape du point a) ci-dessus et le second aspect peut comprendre au moins l'étape du point b) ci-dessus.

### On va d'abord décrire les éléments du point a) ci-dessus puis b).

Dans l'exemple, le dispositif 3 est une carte à puce de transaction notamment bancaire. De préférence, le dispositif comporte une fonctionnalité sans-contact, par exemple une interface radiofréquence (antenne 9) de proximité selon l'ISO 14443 et un microcontrôleur SE radiofréquence capable de décoder et/ou émettre des trames de communication radiofréquence.

Dans l'exemple, la carte à puce comprend une interface de communication à contacts 5 (ou bus ISO 7816) mais pourrait être alternativement tout objet portable notamment une montre, un bracelet et avoir une interface d'un type différent tel USB. De préférence la carte est une carte à interface hybride à contacts 5 ISO 7816 et sans-contact ISO 14443 avec antenne 9 dans le corps de carte 10.

Le dispositif comporte un microcontrôleur de sécurité à puce électronique (SE ou 4), une première interface 5 / port de communication (notamment ISO 7816) reliée au microcontrôleur de sécurité (SE, 4), au moins un composant électronique périphérique (MCU, 11) connecté, via une seconde interface / port de communication, à l'élément de sécurité 4.

Le cas échéant, la totalité ou partie des fonctions du composant MCU, 11 peut être intégrée dans l'élément de sécurité ou inversement.

La carte est équipée ici d'un bornier de contacts 5 (référencé C1-C8 selon le standard ISO 7810), connectés à la puce SE, 4 via son bus de communication standard ISO7816-3 (seules sont illustrées fig. 1C les lignes (RST) et (CLK). La carte 3 intègre un élément sécurisé SE, 4, comprenant un microcontrôleur ou microprocesseur µP2 (fig. 1E), sous forme de puce électronique de carte à puce standard. La puce SE, 4 est ici une puce hybride à contacts et sans-contact de référence P60D081 de chez la société NXP par exemple, mais pourrait être une puce simplement à contacts.

La carte comporte un composant périphérique MCU, 11 qui peut être ou non un microcontrôleur secondaire, ou un coprocesseur, esclave ou non, par rapport au microcontrôleur SE, 4. Le microcontrôleur SE, 4 peut être une puce bancaire. Le composant MCU peut comprendre un microcontrôleur ou microprocesseur µP1 (fig. 1D), un générateur d'OTP (numéro à usage unique) ou d'autres fonctionnalités (génération de cryptogramme notamment pour un cryptogramme dynamique DCV), etc.). Le composant MCU 11, est relié à un capteur d'empreinte 14 affleurant en surface du corps de carte.

Selon une caractéristique, la carte peut être configurée de manière à initier une mémorisation de motifs biométriques de manière autonome avec un connecteur d'alimentation 2 externe dédié.

Le système 1A comporte de préférence un connecteur de carte à puce 2. Il est de préférence fourni avec la carte à l'utilisateur. Ce connecteur peut comporter une source d'énergie 8 (batterie) ou un câble d'alimentation 7 à une source d'énergie et/ou de communication. En l'occurrence, le câble est de type USB. Le système 1A peut comprendre un ordinateur 6 qui peut être de préférence celui de l'utilisateur. Le connecteur spécifiquement configuré de l'invention peut comprendre le cas échéant une fonction d'adaptation de tension pour la carte. Les câbles de données type USB peuvent être rendus non fonctionnels au niveau du connecteur 2. L'invention peut prévoir d'utiliser dans le connecteur 2 uniquement les liaisons d'alimentation et masse (GND) d'un câble USB. Ainsi lors d'une connexion à un ordinateur, il n'y pas de risque de piratage venant de l'ordinateur.

Alternativement, l'ordinateur 6 peut être tout autre notamment une borne d'accès ou un kiosque relié à un serveur en rapport avec le service de transaction (ou application logicielle) contenu dans la carte.

L'ordinateur peut comprendre un logiciel AP2 pour initier / déclencher la mémorisation des empreintes biométriques. Le logiciel peut émettre un signal quelconque à destination de la carte pour lancer la mémorisation.

Alternativement au logiciel AP2, une touche quelconque pressée du clavier peut suffire à envoyer un signal à la carte et être détectée par la carte, de manière à initier l'enrôlement. La carte peut comprendre un programme de lancement sécurisé (notamment dans P26) qui fait ouvrir une fenêtre sur l'écran de l'ordinateur afin de requérir un code PIN destiné à initier une mémorisation d'empreinte si ce dernier est correct.

Le connecteur 2 peut être dédié à l'enrôlement: il peut être de préférence configuré pour permettre un démarrage « non ISO » de la puce de sécurité SE, 4. La puce contient ici les applications de transaction notamment bancaire P20 notamment selon le standard EMV ; Elle peut contenir le code PIN ou alternativement une application de vérification de code PIN à distance sur un serveur dédié notamment bancaire.

Selon un exemple de réalisation préféré de la configuration du connecteur / lecteur 2, ce dernier peut être modifié (fig. 1C) de manière à permettre une mise sous tension et mise à zéro à froid de la puce SE, 4.

Selon cet exemple, le lecteur / connecteur 2 est modifié de manière à ce que le plot GND (ou pôle négatif de la batterie) connecte (en plus de la plage de contact GND de la carte) le plot RESET (RST) de la carte (voire également le plot I/O) ; LA carte est modifié également pour que le VCC du lecteur connecte le plot CLK signal d'horloge de la puce (en plus du plot VCC de la puce). Ainsi, lors de la connexion de la carte au lecteur, la puce démarre de suite en donnant la main au système d'exploitation (OS). C'est l'implémentation utilisant la puce P60. Toutefois, cela pourrait être différent sur une autre puce « SE ».

La puce SE, 4 peut comprendre selon ce mode préféré de détection d'un environnement d'enrôlement, une application logicielle P1 qui compte le temps après la montée en tension VCC et détecte le temps TR de réception d'un signal RST. Si le temps TR est inférieur à par exemple 400/F (F étant la fréquence en hertz) et qu'il n'y a pas de signal sur le plot CLK de la carte, alors l'application P1 fait déclencher la procédure d'initiation d'enrôlement (P2), par exemple dans le microcontrôleur MCU, 11), avec mémorisation de motifs biométriques (un ou plusieurs jusqu'au taux prédéfini).

Ainsi, le lecteur / connecteur 2 selon l'invention peut contenir essentiellement ou uniquement un corps de réception 2 de la carte, une pile / batterie 8 (ou câble 7) pour alimenter la carte en énergie, des plots de communication avec la carte de manière à réduire le coût ou toute modification du connecteur.

Le lecteur / connecteur 2 peut être ainsi exempt de microcircuit intelligent ou de programme / pilote notamment de lecture de la carte, de microcontrôleur. Ainsi, à l'aide de ce connecteur, l'invention permet de commencer un enrôlement autonome, notamment à domicile, avec un coût négligeable.

Alternativement selon un degré plus sophistiqué (et onéreux), le lecteur peut contenir un microcircuit (ou microcontrôleur) et une application logicielle qui envoie un signal spécifique (numérique ou analogique) à la carte 3 dès les premiers échanges entre le lecteur 2 et la carte 3. Ce signal déclenche l'initiation de la capture ou de la mémorisation de données biométrique du titulaire du dispositif.

Alternativement, le lecteur 2 peut être configuré de manière à générer un niveau de tension / courant ou de fréquence d'horloge spécifique qui peut être détecté et reconnu par la carte. Cela peut signifier un logiciel spécifique embarqué dans le lecteur pour moduler le signal d'échange avec le lecteur ou un circuit équivalent remplissant les fonctions évoquées ci-dessus sous forme matérielle ou circuit câblé.

Le lecteur / connecteur 2 peut alimenter en énergie le dispositif 3 par émission d'un champ électromagnétique (RF). Le lecteur peut n'avoir que cette fonction d'alimentation en champ radiofréquence avec ou même sans donnée transmise via le champ électromagnétique. La détection du déclenchement de mémorisation peut prévoir une détermination de fréquence préétablie ou un train d'onde particulier (ou un niveau amplitude de signal) ; Le dispositif 3 peut s'affranchir d'interface à contacts électriques.

L'invention prévoit donc que la carte 3 puisse détecter le lecteur/ connecteur spécifique 2 pour initier un enrôlement ou mémorisation de motifs biométriques. La carte peut être notamment être configurée pour détecter qu'elle n'est pas dans un environnement spécifique d'initiation de l'enrôlement mais dans un environnement de transaction, par exemple bancaire (par échange avec un POS) du fait de l'existence et une détection par la carte d'une procédure prédéterminée connue de transaction : commandes APDU de cette procédure.... Par défaut, la carte peut lancer une séquence d'enrôlement avec mémorisation de données biométrique quand un tel environnement de transaction n'est pas détecté et inversement.

Alternativement, la carte peut être configurée de manière à détecter qu'elle n'est pas dans un environnement de transaction standard, notamment EMV. De cette manière, l'invention permet d'éviter un enrôlement / mémorisation d'empreinte initié accidentellement quand la carte est alimentée en énergie suite à son introduction dans un lecteur de transaction, notamment bancaire (POS), distinct du lecteur 2 spécifique à une mémorisation.

Dans le cas du point b) susvisé précédemment (pouvant être sans connecteur dédié 2, 7 - notamment pour enrôlement hors domicile, dans succursale ou un point de vente), l'invention peut prévoir un lecteur traditionnel de cartes à puce (ISO) et ce peut être une commande APDU classique qui déclenche l'initiation de l'enrôlement.

Selon un mode alternatif au mode préféré (incluant le point a) susvisé), le connecteur / lecteur 2 peut ne pas contenir de batterie 8 mais être doté d'un câble de liaison à un ordinateur personnel 6 (fig. 1A). De la même manière que précédemment avec batterie 8, la puce SE peut détecter une mise sous tension et mise à zéro à froid du fait d'une permutation des liaisons visées ci-dessus (RST, CLK) dans le connecteur 2. L'avantage est de ne pas modifier l'ordinateur 6 en ajoutant un programme AP2.

Alternativement, l'ordinateur personnel 6 peut être doté d'une application logicielle spécifique AP2 permettant d'envoyer un signal prédéterminé de déclenchement de l'enrôlement à la carte, reconnu par la carte.

Le dispositif 3 peut contenir de préférence des éléments indicateurs / avertisseurs (sonores, lumineux, colorés...) configurés pour communiquer avec l'utilisateur selon un protocole prédéfini. Par exemple, il peut comprendre deux lumières LEDs (L1, L2) dans le corps 10 de carte ou en surface, alimentés par un circuit électrique de la carte, piloté par un des microcontrôleurs de la carte, tel l'élément de sécurité SE 4 ou le microcontrôleur de capture biométrique MCU 11.

Alternativement, le lecteur / connecteur 2 peut comprendre ces indicateurs L1, L2 pilotés par des signaux provenant de la carte. Le circuit peut comprendre un détecteur de niveau de sortie d'un port I/O de la puce et un relais piloté par le détecteur pour fermer ou ouvrir des interrupteurs logiques / analogiques placés sur des pistes d'alimentation des Leds, lesdites pistes reliant les Leds au plot VCC et GND.

Les deux diodes LEDs peuvent être également pilotées par deux ports « GPIO » du MCU 11 qui déclenchent deux interrupteurs transistors (MOSFET) d'un circuit d'alimentation de diodes Leds. Par contre, il est préférable de ne pas alimenter les diodes LEDs pendant que le microcontrôleur MCU 11 est en traitement. Les diodes LEDs peuvent être allumées uniquement à la fin du processus. Un fonctionnement des diodes LEDs peut être le suivant selon la session.

En opération d'enrôlement : LED verte clignotante (ex. 100 ms toutes les secondes) pour signaler à l'utilisateur qu'il peut présenter son doigt ou capturer son empreinte. Lorsqu'un doigt est détecté, les LEDs peuvent s'éteindre.

En opération de vérification de données biométriques : aucune LED jusqu'à la fin de la vérification. En cas de test de correspondance / comparaison réussie, la diode LED verte peut être allumée (1/2 seconde par exemple). En cas d'échec de comparaison, la LED rouge peut être allumée. Un autre mode de fonctionnement : une LED peut clignoter pendant la phase de vérification - lorsqu'un doigt est présenté - jusqu'à devenir fixe (verte = OK, rouge = Non OK).

A la fin de l'acquisition / extraction de données biométriques, si la qualité est OK pour l'enrôlement (modèle de référence 40 créé), la LED verte reste « allumée » pendant 1 seconde, sinon la LED rouge reste « allumée » 1 seconde. On pourrait aussi reprendre le clignotement directement (sans afficher de diode rouge qui pourrait perturber l'utilisateur).

Puis le clignotement de la LED verte reprend, avec un clignotement un peu plus rapide (ex. 100 ms tous les 800 ms). A la fin de l'enrôlement, si assez de données biométriques ont été capturées pour valider l'enrôlement, un signal de LED peut être envoyé pour signaler un état suivant : « enrôlement (ou mémorisation) terminé - mais pas activé ».

On va maintenant décrire le second point b) visé précédemment.

Dans ce cas, le connecteur 2 peut ne pas être fourni au titulaire (ex. s'il s'agit d'un POS...) .

Le dispositif (ici une carte), selon le mode préféré de l'invention, est configuré de manière à effectuer (alternativement ou cumulativement avec le point a), l'activation du motif biométrique de référence, l'activation étant effectuée de préférence en réponse à ou en association avec au moins une authentification réussie du titulaire voire deux authentifications pour plus de sécurité.

L'activation incluant ou non une ou deux authentifications selon l'invention peut être mise en œuvre le plus aisément et le plus transparent possible pour améliorer l'expérience utilisateur.

La finalisation de l'enrôlement comprenant cette activation peut être effectuée de préférence au cours d'une transaction standardisée, notamment bancaire telle que du type EMV que l'utilisateur effectue régulièrement. L'activation peut être effectuée au cours de tout échange du dispositif avec l'extérieur du dispositif.

En pratique, selon le mode préféré de l'invention, l'utilisateur effectue le début de l'enrôlement (mémorisation des motifs biométriques) à son domicile et finalise l'enrôlement (activation des motifs mémorisés) ultérieurement à la première occasion d'échange de données avec l'extérieur. Cela peut être lors d'une transaction standardisée et de manière transparente (ou quasi transparente) pour l'utilisateur.

Selon une caractéristique, pour l'étape de finalisation (activation), le dispositif peut être configuré pour détecter au préalable un environnement de transaction électronique bancaire. Par défaut, la carte peut détecter qu'elle n'est pas en connexion avec le connecteur 2 pour passer à l'activation (par exemple si elle détecte un processus de lecture ISO 7816 normal (ex. distinct de celui de la fig. 1C).

*La carte passe en activation de préférence si elle reçoit un signal lui indiquant qu'une authentification a eu lieu (dans notre cas, lorsque le PIN a été présenté sur un POS)* . *Il n'y a pas nécessairement de détection sur le type de lecteur utilisé.*

Dans l'exemple, on décrit des éléments d'architecture matérielle et logicielle de la carte ci-après. La carte peut comprendre de manière connue (fig. 1D, 1E, 2-4) une application logicielle ou (ou programme applicatif), par exemple une application biométrique bancaire, notamment de paiement (P20) ; Il peut s'agir d'application spécifiée par les schémas de paiement, permettant d'authentifier l'utilisateur par une présentation du PIN ou par une reconnaissance biométrique (ex. reconnaissance d'une empreinte digitale) ou vice versa.

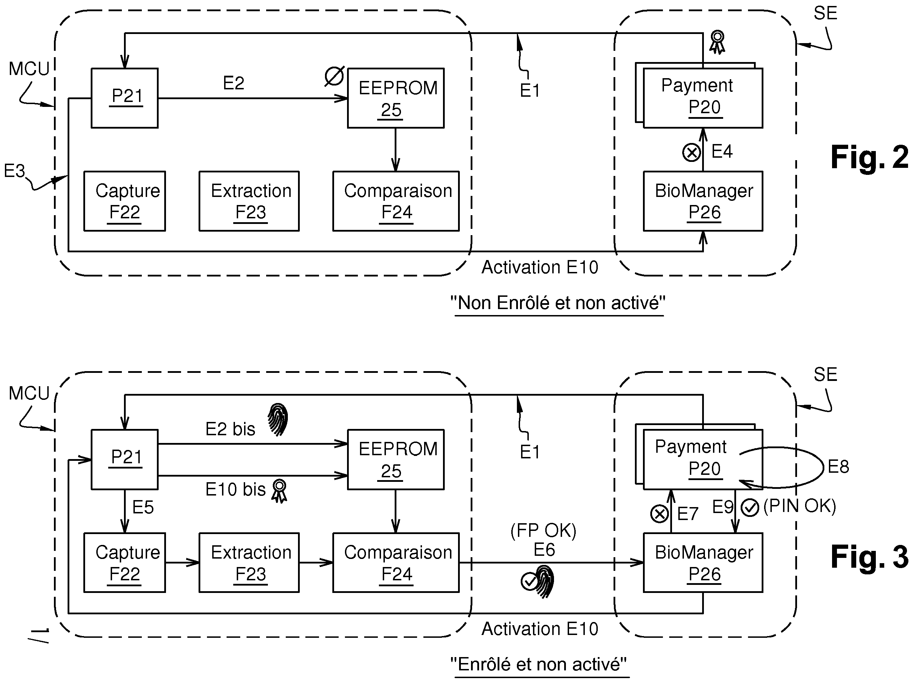

La carte comprend de manière connue (fig. 2-4):
- une application P21 de gestion des données biométriques enrôlées / mémorisées notamment dans la puce MCU (également nommé gestionnaire des données biométriques);
- une fonction (ou application) F22 « Capture » mettant en œuvre un processus déclenchant l'acquisition d'une image ou données biométriques sur le capteur biométrique 14 ;
- une fonction (ou application) F23 « Extraction » mettant en œuvre un processus de conversion des données brutes (images) en des données compressées (ou minuties) pour accélérer la reconnaissance ;
- une fonction (ou application) F24 « Comparaison » mettant en œuvre un processus de reconnaissance de l'image fraîchement acquise ou capturée par rapport à l'image d'enrôlement (ou modèle de référence 40) mémorisée préalablement ;
- un registre 25 ou une mémoire de sauvegarde de données biométriques enrôlées activées ou non activées.

Dans l'exemple, l'invention propose que la carte 3, selon un mode préféré de réalisation, comprenne en outre une application P26 (gestionnaire d'enrôlement de données biométriques ou « BioManager »). Ce gestionnaire d'enrôlement P26 à l'avantage de s'intercaler ou de coopérer étroitement avec l'application bancaire P20, (ici dans le microcontrôleur SE, 4 mais pourrait être ailleurs, notamment dans le MCU, 11). Le programme applicatif P26 peut être notamment configuré pour coopérer avec P20 de manière à déterminer comment la transaction doit se dérouler (avec ou sans PIN) selon l'état ou des informations d'enrôlement de sa connaissance (ou porté à sa connaissance) ;

Le programme P26 peut également coopérer avec P20 pour verrouiller / activer les données biométriques mémorisées au moment opportun (notamment quand toute la sécurité requise est satisfaite : exemple suite à une double authentification).

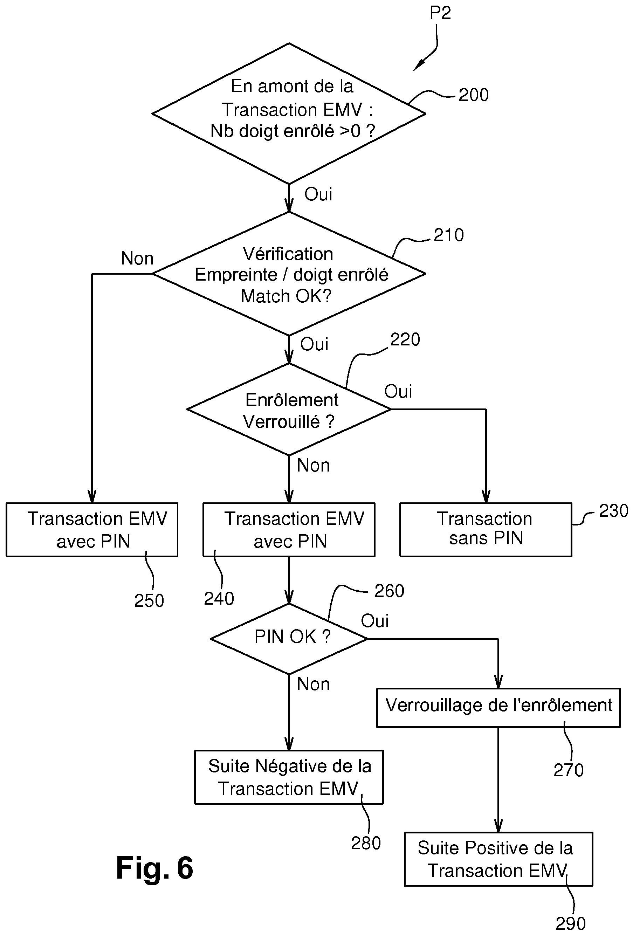

L'application P26 « BioManager » est ici en étroite relation de communication ou coopération avec l'application de paiement P20 :
- L'application P26 « BioManager » peut notamment permettre à l'application de paiement biométrique P20 de récupérer le résultat (OK, ou le score de reconnaissance de données biométriques capturées lors d'une authentification) de l'identification biométrique effectuée par la puce de collecte biométrique, ici la puce ou microcontrôleur MCU, 11.
- Selon une configuration spécifique du mode préféré de l'invention, la puce SE, 4 comprend une fonction (ou application ou étape) 9 permettant d'envoyer des informations (ou commandes) au gestionnaire d'enrôlement des données biométriques « BioManager » P26, quand le PIN est vérifié lors d'une transaction de type « EMV » dans l'application de paiement P20.
- L'application de paiement P20 peut aussi recevoir une information E4 du BioManager P26 indiquant que le modèle de référence 40 n'est pas encore activé ou validé (P26 étant averti de cet état par P21) ;
- De même, P20 peut recevoir une information E7 indiquant que les données biométriques sont mémorisées (enrôlées), non encore activées et concordent ou non avec celles fraîchement acquises lors d'une session de transaction, (P26 étant averti par le MCU) .
- L'invention peut prévoir également une fonction (application ou étape) E10 sur fig.3 ou 260 sur fig. 6) déclenchée ici par P26, permettant d'informer le programme gestionnaire P21 des données biométriques enrôlées pour activer (E10, E10bis) l'enrôlement quand le PIN est vérifié (260) et qu'une reconnaissance biométrique réussie (270, E6) est intervenue au cours d'une même session d'échange (uniquement si la mémorisation n'est pas encore activée). Cette fonction E10 est gérée par le gestionnaire « BioManager » P26.
- L'invention peut prévoir également une fonction (application ou étape) permettant la mise à jour (E10bis) des données biométriques enrôlées / mémorisées dans la mémoire 25, à réception par le gestionnaire P21 d'une commande d'activation E10 de ces données biométriques, ladite commande E10 étant émise par le gestionnaire d'enrôlement P26 (BioManager).

D'une manière générale, tout ou partie des applications du MCU peuvent être disposées dans la puce SE ou inversement. De même, il est possible d'avoir qu'un seul microcontrôleur sécurisé réalisant toutes les fonctions réparties entre deux microcontrôleurs. De préférence, la puce SE est maître vis à vis du MCU mais alternativement chacune peut être maître à tour de rôle vis-à-vis de l'autre.

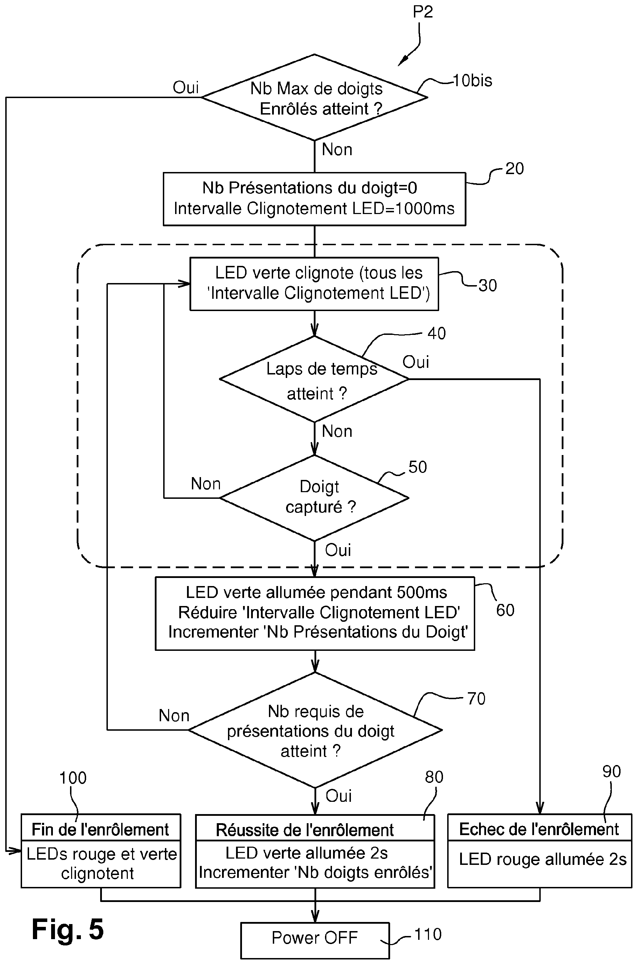

On va décrire maintenant le fonctionnement de l'invention (initiation d'enrôlement) par des étapes du procédé illustrées à la figure 5 et en relation avec le système 1A, le dispositif étant une carte 3.

### Initialisation de l'enrôlement (ou de la mémorisation) (fig. 5)

- A l'étape 10 (non représentée), la carte a été insérée dans le lecteur spécifique 2 et un signal non-ISO est détecté par le microcontrôleur SE, 4 qui en réponse déclenche l'initiation de la procédure d'enregistrement (ou d'enrôlement ou de mémorisation) des motifs biométriques (par exemple : détection d'une montée du signal RST avant le délai minimal requis par l'ISO, après montée du signal VCC ou une mise sous tension et mise à zéro à froid illustrées figure 1c).
- Un test « 10bis » d'une des puces MCU ou SE, interroge le gestionnaire (Biomanager) P21 des données biométriques enrôlées notamment via consultation du registre 25 (fig. 2) pour savoir si le nombre maximum de doigts enrôlé est atteint;
- Aux étapes 20/30, (test ci-dessus négatif), une diode LED de la carte signale que la phase d'enrôlement a commencé (par exemple en faisant clignoter la LED verte à une fréquence lente) ; Pour cela un signal ou potentiel haut et bas alternatif peut être mis par le SE ou MCU sur un de ses plots GPIO vers une LED;
- A l'étape 40, après un laps de temps, si aucun doigt n'est présenté (ou reconnu) pendant la phase d'attente, la procédure d'enrôlement / mémorisation est interrompue et un signal est envoyé à l'utilisateur (par exemple la LED rouge reste fixe pendant 2 secondes).
- A l'étape 50, (laps de temps non écoulé) l'utilisateur peut alors présenter son doigt sur le capteur d'empreinte plusieurs fois afin de couvrir une zone suffisamment large de son empreinte (par reconstruction des images successives (N1-N7, fig. 7).

A chaque enregistrement correctement réalisé, un signal peut être émis à l'utilisateur (par exemple en laissant la LED verte allumée pendant 500 ms) puis en remettant un clignotement pour indiquer de poursuivre une autre capture d'empreinte et ainsi de suite.
- A l'étape 60, l'utilisateur suit le progrès de la procédure grâce aux LEDs de la carte (par exemple en constatant une accélération ou réduction de la fréquence de clignotement des LEDs), après chaque enregistrement réussi ;
- A l'étape 70, le nombre requis de captures de motifs biométriques est atteint ;
- A l'étape subséquente 80, la LED verte signale à l'utilisateur que la procédure est terminée (par exemple, la LED verte reste fixe pendant 2 secondes).
- A l'tape 110, la carte peut être mise hors service.

L'utilisateur peut enregistrer un second doigt (ou recommencer l'enregistrement du doigt qui a échoué) en retirant la carte du lecteur spécifique et en la réinsérant (la même procédure sera répétée).
- De retour à l'étape 10bis (branche oui), lorsque le nombre maximum de doigts enrôlés /mémorisés avec succès aura été atteint à l'étape 10bis, les diodes LEDs de la carte signalent à l'étape 100, que le quota est atteint (par exemple en alternant un clignotement de la LED verte et de la LED rouge pendant 2 secondes).

Si la carte est retirée puis réinsérée du lecteur spécifique, le même signal de quota atteint sera visible pour l'utilisateur. L'enrôlement est alors terminé.

L'invention peut prévoir deux fonctionnements liés à la mémorisation ci-après :
- La carte peut bloquer la mémorisation une fois la limite de mémorisation d'empreinte atteinte. (avec un mécanisme de réinitialisation si nécessaire : notamment un double tapotement du doigt sur le capteur 14 ou autre tel qu'un appui long, une présentation d'un motif spécifique...) ;
- Ou la carte permet d'enrôler à nouveau des doigts tant qu'on utilise le connecteur (ex : si la limite de doigts pouvant être mémorisés est de trois alors la carte conserve les trois derniers doigts enrôlés (il peut y avoir mémorisation sur les anciennes empreintes de manière cyclique).

De préférence pour des raisons de sécurité, l'invention peut prévoir de verrouiller qu'une empreinte à la fois. Si on a plusieurs doigts enregistrables (disons « n »), selon ce mode préféré, l'utilisateur devra enregistrer de 1 à n doigt lors d'une même session. Puis tous les doigts enrôlés seront activés lors de la première transaction avec code PIN reconnu.

Toutefois pour une meilleure sécurité, l'invention peut prévoir d'enregistrer « n » doigts. Puis, lors de la première transaction avec code PIN reconnu, si le doigt « x » (parmi n) est également reconnu, alors seul celui-ci est activé. Si ce même doigt est présenté à nouveau ultérieurement, le code PIN ne sera plus nécessaire.

Par contre, si un autre doigt « x1 » différent du doigt « x » est présenté, il faudra retaper le code PIN pour activer cet autre doigt « x1 ».

D'une manière générale, il n'est pas nécessaire d'atteindre le quota de doigts autorisés pour procéder à l'activation / verrouillage de l'enrôlement. Il suffit d'avoir au moins un doigt enrôlé avec succès.

### Réinitialisation de l'enrôlement (optionnel).

Tant que le verrouillage des doigts enrôlés n'a pas été effectué, l'invention peut prévoir d'effacer tous les doigts enrôlés et de recommencer la procédure en envoyant un signal particulier au capteur (par exemple en tapant 2 fois sur le capteur biométrique en moins de 500 ms si un processus d'enrôlement n'est pas en cours).

L'effacement sera alors signalé à l'utilisateur par les LEDs (par exemple avec un clignotement de la LED rouge pendant 2 secondes).

### Verrouillage / finalisation / activation de l'enrôlement (étape 80)

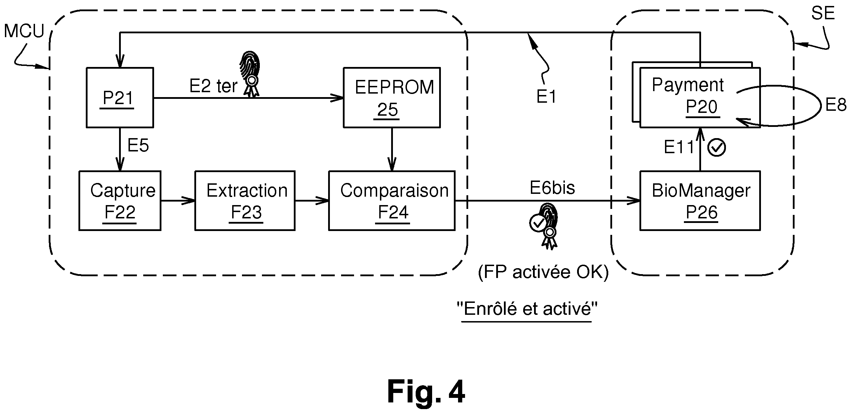

Lorsqu'au moins un doigt a été enrôlé / mémorisé avec succès, il est possible de verrouiller l'enrôlement (selon fig.4 ou fig. 6) .

Principe de fonctionnement de l'invention (fig. 6) selon un mode préféré pour effectuer un verrouillage de l'enrôlement via une transaction sur un terminal POS, avec PIN vérifié.
- A l'étape 200, lors d'un paiement sur un POS et en amont de la transaction, le programme teste que le nombre d'empreintes de doigt mémorisées est non nul ; puis en cas de succès passe à l'étape de test 210 ;
- A l'étape de test 210, l'empreinte nouvelle (ou motif biométrique), fraîchement acquise, est comparée à au moins une empreinte enrôlée ou mémorisée préalablement dans le registre 25, que cette dernière ait été verrouillée (activée notamment avec un indicateur d'activation) ou non ;
- Si le test 210 est négatif, (branche NON), l'empreinte n'est pas reconnue, le programme P2 de l'invention se boucle sur un mode opératoire de transaction EMV avec PIN (étape 250);
- Si l'étape de test 210 est positif, (branche OUI), l'empreinte a été reconnue avec succès et le programme se branche sur l'étape suivante de test 220,
- A l'étape 220 (branche OUI), le programme vérifie que l'empreinte enrôlée a déjà été verrouillée (activée), et en cas de succès du test, le programme se branche sur l'étape 230 ;
- A l'étape 230, la transaction de paiement s'effectue sans avoir à entrer son code PIN (tel que décrit dans les spécifications des schémas de paiement) puisqu'un modèle de référence activé /validé est déjà constitué dans la carte ;

De préférence, l'invention prévoit la possibilité de verrouiller qu'un doigt à la fois pour des raisons de sécurité (ex : une personne intercepte la carte à l'insu de son propriétaire et enrôle un de ses doigts parmi les doigts du propriétaire de la carte) .
- Par contre si le test 220 détecte une absence de verrouillage (branche NON) (Test 220 négatif) malgré que l'empreinte nouvelle ait été reconnue, le programme P2 se branche alors à l'étape suivante 240 où l'utilisateur doit présenter son code PIN (comme s'il n'avait pas présenté d'empreinte ou que celle-ci n'avait pas été reconnue) ;
- A l'étape de test 260, (suite à l'étape 240), l'application de paiement (P20 - fig. 3) a vérifié avec succès le PIN (PIN OK) lors de la transaction et une commande propriétaire (E10 - fig. 3) correspondant à l'étape 270 (fig.6), est envoyée à l'application P21 gérant le verrouillage de l'empreinte enrôlée afin de signaler l'authentification de l'utilisateur. Cette commande E10 provoque via P21 une activation des données enrôlées / mémorisées E10bis dans le registre 25 (fig.3) . Le gestionnaire P21 du MCU mémorise un état d'activation dans le registre 25 associé aux minuties enrôlées (à la place d'un état préalablement non activé).
- A l'étape de test 260 (branche *NON), le PIN tapé n'est pas correct, et donc le programme de l'invention se dirige sur la suite de la transaction EMV à l'étape 280 qui se déroule après classiquement (par exemple en demandant de retaper le PIN ou en rejetant la transaction).*

Sur les figures 5 et 6, les différentes étapes correspondent à des étapes possibles du procédé de l'invention et/ou des étapes d'un programme logiciel de fonctionnement exécuté par un des microcontrôleurs SE et/ou MCU. Idem pour les figures 2 à 4. Les étapes du procédé P2 peuvent correspondre ou équivaloir à celles du programme P26 du BioManager

L'étape de finalisation ou d'activation de l'enrôlement va maintenant être décrite en étroite relation avec les figures 2-4 illustrant respectivement trois situations possibles ci-après :
- Fig. 2 : empreinte non enrôlée et non activée ;
- Fig. 3 : empreinte enrôlée mais non activée ;
- Fig. 4 : empreinte enrôlée et activée.

Concernant la situation (non enrôlé et non activé) relative à Fig. 2.
- A l'étape E1, au début d'une transaction, en l'occurrence ici une séquence de transaction bancaire EMV à l'aide d'un terminal de paiement sur un lieu de vente (POS), la puce SE, 4 interroge ou consulte le microcontrôleur MCU pour connaître l'état d'enrôlement, notamment savoir s'il y a des données biométriques mémorisées dans le registre 25.
   Par exemple, la puce SE peut envoyer directement, via l'application P20, une commande E1 telle qu'une requête de comparaison de données biométriques captées sur le capteur 14, au microcontrôleur MCU, 11, (La commande peut être initiée également via le gestionnaire (Biomanager) P26;
- A l'étape E2, le MCU (via notamment le gestionnaire d'enrôlement P26) vérifie, lit ou interroge un registre 25 des minuties enrôlées pour savoir s'il y a des minuties inscrites ou mémorisées pour comparaison éventuelle;
- A l'étape E3, le gestionnaire des minuties P21 du MCU ayant appris que des minuties ne sont pas inscrite au registre 25, il en informe le gestionnaire d'enrôlement P26 de données biométriques (BioManager);
- A l'étape E4, le gestionnaire d'enrôlement P26 « BioManager » en informe l'application de paiement P2O (pas de minuties enrôlées), ce qui provoque dans l'application P20 une poursuite de la transaction EMV en mettant en œuvre une authentification par PIN code au lieu de données biométriques.

Concernant la situation relative à la fig. 3 (minuties enrôlées non activées) : elle peut correspondre aussi en partie à des étapes de la figure 6).
- L'étape E1 est identique au cas précédent ;
- A l'étape E2bis, le gestionnaire de minuties P21 a constaté dans sa requête auprès du registre 25 que des minuties sont enrôlées / mémorisées dans le registre 25 mais non activées (ou enrôlement non finalisé);
- A l'étape suivante E5, le MCU ou gestionnaire P21 des minuties enrôlées, fait donc procéder à un processus de capture de données biométriques nouvelles via l'application de capture 22 suivie d'extraction de minuties nouvelles et de comparaison 24 avec les minuties mémorisées et non activées, préalablement contenues dans le registre 25.

- A l'étape suivante E6, le résultat positif (FP OK) de la comparaison est transmis à l'application gestionnaire de l'enrôlement P26 « BioManager » ;
- A l'étape E7, Biomanager P26, à son tour, informe l'application de paiement 20 que la transaction doit s'effectuer encore avec le PIN (car la mémorisation est non activée). Cette authentification constitue également et avantageusement une mesure de sécurité transparent pour l'utilisateur, permettant une activation / validation des données biométriques);
- A l'étape suivante E8, l'application de paiement P20 procède à la transaction EMV en mettant en œuvre un PIN (car les minuties sont non activées ou l'enrôlement est non finalisé) - (E8 peut correspondre à l'étape 240 fig. 6);
- A l'étape suivante E9, quand le PIN a été vérifié au cours de la transaction EMV, une information représentative par exemple « PIN OK » est envoyée par l'application de paiement 20 ou par la puce sécurisée SE, 4 au gestionnaire d'enrôlement P26 de données biométriques « BioManager » ;
- A l'étape suivante E10, dès que le gestionnaire de données biométriques P26 possède, (ici dans la même session de transaction), les deux informations E6 et E9 (FP OK et PIN OK) comprenant le résultat positif de la comparaison biométrique et celui positif du code PIN, alors P26 fait parvenir une requête d'activation E10 (de contrôle ou de finalisation) de l'enrôlement au microcontrôleur MCU, notamment au gestionnaire P21 de minuties enrôlées ;
- A l'étape suivante 11, le MCU ou le gestionnaire P21 met à jour les informations des minuties enrôlées (non activées) en les activant, (par exemple en mémorisant dans le registre associé aux minuties, une information d'activation ou de finalisation ou un drapeau d'activation).

Grâce à cette activation la transaction suivante peut désormais être effectuée à l'aide de données biométriques capturées sur l'instant et sans PIN (voir fig. 4).

Concernant la situation relative à la figure 4 (minuties enrôlées et activées).
- Les étapes diffèrent du cas précédent à partir de l'étape E2ter en ce que le gestionnaire P21 constate dans sa requête auprès du registre 25 que des minuties sont enrôlées (ou mémorisées) dans le registre 25 et activées (ou verrouillées);
- A l'étape suivante E5, comme précédemment, le MCU ou gestionnaire P21 des minuties enrôlées, fait procéder à un processus de capture de données biométriques nouvelles via l'application de capture F22 suivie d'extraction de minuties nouvelles F23 et de comparaison F24 avec les minuties de référence mémorisées préalablement dans le registre 25.
- A l'étape suivante E6bis, le résultat « FP activée OK » (signifiant empreinte activée OK) de la comparaison des minuties nouvelles avec des minuties de référence activées est transmis à l'application P26 gestionnaire d'enrôlement des données biométriques « BioManager » ;
- A l'étape E11, le gestionnaire BioManager P26 informe l'application de paiement 20 d'effectuer la transaction directement sans PIN (l'authentification biométrique ayant été effectuée correctement vis-à-vis d'un modèle biométrique de référence activé / validé. (Ces étapes peuvent correspondre aux étapes conduisant à l'étape 230 - fig. 6).

Verrouillage (finalisation ou activation) de l'enrôlement à l'aide d'un smartphone NFC et une application.

A la figure 8, une activation A1 des données biométriques mémorisées dans le dispositif 3 à l'aide d'un téléphone mobile 31 NFC. Le téléphone comprend des moyens de saisie biométrique tel un capteur d'empreinte 34 ou autre (caméra / photographie du visage.... Le téléphone peut éventuellement être relié à un serveur via un réseau de télécommunication et une base de données d'authentification comprenant des données biométriques (ou données représentatives) préalablement capturées de l'utilisateur.

L'utilisateur télécharge une application d'authentification / activation dédiée « APA » sur une boutique en ligne à l'aide de son téléphone intelligent 31 doté d'une fonction de communication de proximité (NFC) ; puis il s'authentifie dans l'application dédiée APA par tout moyen notamment à l'aide d'une saisie de données biométriques par exemple, une photographie du visage ou une empreinte de doigt à l'aide du capteur 34.

Le téléphone interroge la base de données via l'application APA pour comparer les données fraîchement capturées (ou une valeur représentative sécurisée avec des minuties capturées (ou des valeurs représentative des minuties) mémorisées dans la base de données.

Le cas échéant, les données biométriques (ou des valeurs représentatives équivalentes) peuvent être mémorisées dans le téléphone grâce à l'application dédiée APA pour effectuer directement en direct une authentification et activation.

En cas d'authentification réussie, l'utilisateur place, une fois authentifié, la carte à puce de transaction sous son téléphone avec le NFC actif. L'application du téléphone « APA » signale à l'utilisateur que la communication avec la carte biométrique a été établie et demande si l'utilisateur veut activer la carte biométrique.

L'utilisateur peut alors valider le verrouillage des empreintes enrôlées et finaliser l'enrôlement à l'aide de l'application de son téléphone en pressant la zone affichée interactive « OUI ».

La carte peut renvoyer un signal à l'application mobile APA dédiée qui informe l'utilisateur du succès de la procédure de verrouillage / activation.

Une fois l'enrôlement verrouillé / activé, il n'est plus possible (de préférence), de modifier ou d'ajouter un doigt enrôlé. L'utilisation de l'empreinte pour autoriser le paiement est alors possible.

Cette procédure de finalisation (fig. 8) est une alternative possible mais moins préférée pour des raisons de sécurité car l'empreinte verrouillée n'est pas nécessairement vérifiée comme appartenant à l'utilisateur authentifié sur l'application dédiée.

Alternativement, en cas d'une connexion NFC fiable, il est possible d'effectuer une reconnaissance d'empreinte dans la carte.

L'invention a l'avantage de permettre l'acquisition des données biométriques tranquillement au domicile de l'utilisateur, en temps masqué notamment au cours s'une première session d'échange d'information ou d'acquisition ou mémorisation de données biométriques avec le dispositif.

Elle permet une acquisition de plusieurs motifs / empreintes / minuties successives, notamment de manière décentralisée, jusqu'à atteindre un taux suffisant ou une acquisition complète pour assurer un fonctionnement efficace d'une authentification biométrique. Une session différente de mémorisation peut être par exemple commencée par un nouveau signal RESET ou nouvelle détection d'un signal d'initialisation de la mémorisation par la carte ou être déterminée entre une première alimentation et fin d'alimentation de la carte.

De préférence, l'invention prévoit un algorithme ou programme d'enrôlement qui requiert peu de présentations (environ 4 à 6) d'un même doigt au cours d'une même session. Et donc, le programme prévoit toutes les présentations d'un même doigt d'une seule traite, par exemple dans un délai de quelques minutes (notamment moins de 3 ou 5 mn) dès le début de la mémorisation. En cas d'interruption accidentel ou non dans ce délai (déconnexion de la carte, nombre de présentation insuffisant dans un délai prédéterminé, l'invention peut prévoir de préférence de reprendre la mémorisation de 4 à 6 empreintes d'un doigt depuis le début.

Par exemple, les capteurs d'empreintes actuels pour carte à puce ont des dimensions insuffisantes pour capturer une surface nécessaire d'empreinte de doigt. Il est donc requis de procéder à l'acquisition de plusieurs empreintes se complétant pour couvrir une surface la plus étendue possible (fig. 7).

Ainsi par exemple, la figure 7 illustre une acquisition de 7 empreintes qui sont juxtaposées (ou assemblées / combinées) en mémoire du dispositif pour définir une empreinte de référence (ayant une étendue suffisante par rapport à un seuil prédéterminé).

L'invention comprend de préférence et manière connu un algorithme d'assemblage et de reconstruction de motifs d'empreintes jusqu'au un taux prédéfini. Il n'est pas exclu d'avoir un seul motif (voire deux) capturés et activés pour mettre en œuvre l'invention.

L'invention permet ensuite de valider l'acquisition des motifs (ou d'activer ou de verrouiller ou finaliser) en toute sécurité et toute transparence pour l'utilisateur, à l'aide d'une session subséquente d'échange d'information avec le dispositif. La session comprenant une authentification quelconque (PIN, empreinte, autre authentification).

De préférence, la session de validation de l'acquisition des motifs et donc de finalisation de l'enrôlement s'effectue au cours d'une seconde session d'échange (ou de communication) de données avec le dispositif (distincte de la première), cette seconde session étant relative à une transaction standardisée ou une transaction mettant en œuvre un service de transaction (transport, paiement, accès, authentification...) .

Dans l'exemple, la finalisation s'effectue au cours d'une transaction bancaire de type EMV.

Autrement dit, l'invention comprend une étape d'acquisition (simple ou multiple) de données biométriques au cours d'une première session d'acquisition / mémorisation et une seconde étape de verrouillage au cours d'une seconde session d'échange (distincte de la première). La seconde session peut comprendre, de préférence, une authentification de l'utilisateur.

Pour que ce soit en temps masqué ou transparent pour l'utilisateur, il est préférable d'effectuer une authentification utile pour autre but que l'enrôlement. L'authentification est utile par exemple quand c'est pour effectuer une transaction électronique avec le dispositif et d'utiliser à bon escient le résultat de l'authentification à des fins de validation ou finalisation de l'enrôlement (ou activation des données biométriques acquises).

Pour la finalisation, l'invention permet, à l'aide d'une phase d'acquisition d'empreinte et de comparaison avec celles mémorisées de s'assurer que la finalisation s'effectue bien avec le même utilisateur. En effet, l'activation des motifs s'effectue uniquement si le résultat de la comparaison est positif (authentification biométrique).

Alternativement, l'activation peut s'effectuer avec une authentification avec code PIN. L'authentification peut être effectuée également au cours d'une opération utile de transaction électronique.

Alternativement, dans le mode préféré, l'activation / finalisation utilise une double authentification. Les authentifications peuvent être effectuées, notamment dans l'exemple, par empreinte biométrique et par code PIN.

L'authentification avec l'empreinte biométrique permet de faire le lien entre les deux sessions d'échange distinctes (discontinues entre-elles) qui ont pu être réalisées à des périodes séparées dans le temps (heures, jours) ou l'espace (lieux différents domicile et agence bancaire) voire le contrôle. L'authentification garantit que l'utilisateur ayant effectué l'acquisition est le même que celui effectuant le verrouillage.

Le verrouillage utilise un double facteur d'authentification avec en plus une authentification par code PIN supplémentaire réussie.

L'invention utilise avantageusement une double authentification avec le futur moyen d'authentification (empreinte) et celui courant (PIN) qui deviendra inutile.

L'invention ajoute avantageusement un agent logiciel P26 (programme applicatif) appelé « gestionnaire d'enrôlement « BioManager ». Ce dernier est ici placé auprès de l'élément de sécurité SE, 4 (par exemple entre l'application de transaction et le gestionnaire des données biométriques) contenant l'application de transaction électronique. Le gestionnaire P26 « Biomanager » est chargé de recevoir (ou détecter ou intercepter ou contrôler) les informations d'authentification biométrique (et/ou effectuée autrement, par exemple ici par PIN) .

L'information d'authentification biométrique réussie provenant du MCU (par exemple gestionnaire de minuties) et/ou l'autre authentification (par exemple par PIN) provenant de l'application de transaction P20, sont reçues par le gestionnaire d'enrôlement P26 « BioManager ». Ce dernier déclenche le verrouillage ou activation des données biométriques (ici via le gestionnaire d'enrôlement P21 de données biométriques).

Le gestionnaire d'enrôlement P26 BioManager a également pour fonction de recevoir / détecter une information d'absence de donnée biométrique enrôlée, mémorisées du MCU pour en réponse informer l'application de transaction P20 de poursuivre la transaction de manière habituelle ici avec une authentification avec PIN code.

Le gestionnaire d'enrôlement « Biomanager » a également pour fonction de recevoir une information de présence de données biométriques mémorisées mais non-activées, notamment du MCU pour en réponse informer l'application de transaction P20 de poursuivre la transaction de manière habituelle ici avec une authentification avec PIN code puisque l'enrôlement n'est pas finalisé (données biométriques non activées).

Le gestionnaire d'enrôlement P26 « Biomanager » a également pour fonction (notamment dans l'exemple à la suite de la mise en œuvre de la fonction ci-dessus), de recevoir / détecter une information d'authentification biométrique réussie et/ou information d'authentification avec code PIN réussie de l'application de transaction pour, en réponse, activer les données biométriques non encore activées.

## Revendications

1. Procédé pour enrôler un titulaire de dispositif biométrique de transaction (3), comportant l'étape suivante :
- mémorisation d'un motif biométrique (N1-N7) dans le dispositif,
**caractérisé en ce que** un état est associé audit motif biométrique, l'état étant initialisé à « non activé », **en ce que** le dispositif est configuré pour authentifier le titulaire en utilisant ledit motif biométrique uniquement si son état associé a été préalablement changé à « activé » et **en ce que** le procédé comprend les étapes :
- a) fourniture au dispositif d'une alimentation par un connecteur (2) d'alimentation portable et mobile, ledit dispositif étant configuré pour déclencher ladite mémorisation en réponse à la détection d'un comportement spécifique du connecteur,
- b) activation (E10, E10bis, A1) du motif biométrique (N1-N7) en changeant à « activé » l'état associé au motif biométrique, ladite activation étant effectuée par le dispositif en réponse ou en association à une authentification non biométrique réussie (260) du titulaire; ladite activation (E10, E10bis, A1) étant effectuée lors d'une transaction électronique (P2) mettant en œuvre une vérification biométrique (210) réussie d'une empreinte biométrique fraîchement acquise et ladite authentification non biométrique réussie du titulaire (260).

2. Procédé selon la revendication précédente, dans lequel le connecteur d'alimentation présente une configuration avec une polarité et/ou branchement de ses plots non conforme à l'ISO 7816.

3. Procédé selon l'une des revendications précédentes, dans lequel ladite mémorisation (60) s'effectue lors d'une première session d'échange (P1) d'information entre le dispositif et le connecteur et dans lequel ladite activation (E10, E10bis, A1) s'effectue au cours d'une seconde session (P2) d'échange d'information entre le dispositif et un terminal (POS, 31), la seconde session étant distincte de la première.

4. Procédé selon l'une des revendications 2 ou 3, dans lequel ledit connecteur (2) est configuré pour véhiculer une tension ou signal (GND, VCC) de déclenchement de ladite mémorisation sur les plots (RESET, CLK), distincts de ceux prévus par l'ISO 7816, un signal de remise à zéro émis hors du délai prévu par le standard ISO 7816, un signal logique ou analogique.

5. Procédé selon l'une des revendications 1 ou 2, dans lequel ladite authentification (260) est effectuée par le dispositif couplé à un terminal de transaction agréé par une entité de service de transaction (POS), ou par une unité de traitement (31) de l'utilisateur comprenant une application de transaction sécurisée, par délégation d'un serveur ou entité de service de transaction.

6. Système (1A, 1B), pour enrôler un titulaire de dispositif (3) de transaction biométrique,
ledit système étant configuré (8, 14, P20, P26) pour effectuer une mémorisation d'un motif biométrique (N1-N7) dans le dispositif,
**caractérisé en ce qu'**il comprend:
- a) un connecteur (2) d'alimentation portable, configuré (GND, VCC) pour fournir une alimentation au dispositif biométrique de transaction, ledit dispositif biométrique de transaction étant configuré pour déclencher ladite mémorisation en réponse à la détection d'un comportement spécifique du connecteur, ledit dispositif étant configuré pour associer un état au motif biométrique, l'état étant initialisé à « non activé », le dispositif biométrique de transaction étant configuré pour authentifier le titulaire en utilisant ledit motif biométrique uniquement si son état associé a été préalablement changé à « activé »,
- b) et **en ce qu'**il est configuré (P2, P21, P26) pour effectuer une activation (E10, E10bis, A1) du motif biométrique (N1-N7) en réponse ou en association à une authentification non biométrique réussie (260) du titulaire, l'activation étant effectuée en changeant à « activé » l'état associé au motif biométrique;
ledit dispositif comprenant un agent logiciel (P26) gestionnaire pour réaliser les étapes suivantes :
- déclenchement ou contrôle de l'activation (E10, E10bis) du motif biométrique (N1-N7) lors d'une détection d'une vérification biométrique réussie (210) d'une empreinte biométrique fraîchement acquise et de ladite authentification non biométrique (260) réussie.

7. Système selon la revendication précédente, dans lequel le système est configuré pour effectuer ladite mémorisation lors d'une première session (P1) d'échange d'information (N1-N7) entre le dispositif (3) et le connecteur et ladite activation (E10, E10bis, A1) lors d'une seconde session (P2) d'échange d'information entre le dispositif et un lecteur, la seconde session étant distincte de la première.

8. Système selon la revendication précédente, dans lequel ledit premier connecteur électrique comprend un branchement connectant le plot de masse (GND) sur le plot de mise à zéro (RST) de la carte et le plot d'alimentation en énergie (VCC) sur le plot d'horloge (CLK).

9. Système selon l'une des revendications 6 à 8, dans lequel ledit dispositif (3) comprend un agent logiciel (P26) gestionnaire pour réaliser au moins une étape parmi les étapes suivantes :
- informer (4) une application de transaction (P20) de poursuivre la transaction avec une authentification par code PIN lors d'une détection d'absence de données biométriques mémorisées ;
- informer (11) l'application de transaction de poursuivre la transaction avec authentification par code PIN lors d'une détection de données biométriques mémorisées et non activées ;
- contrôler / commander (E10, E10 bis) l'activation (E10, A1) des données biométriques non encore activées lors d'une détection d'une vérification biométrique réussie (210) d'une empreinte biométrique fraîchement acquise et de ladite authentification non biométrique réussie (260).

## Patentansprüche

1. Verfahren zum Registrieren eines Inhabers einer biometrischen Transaktionsvorrichtung (3), aufweisend den folgenden Schritt:
- Speichern eines biometrischen Musters (N1-N7) in der Vorrichtung,
**dadurch gekennzeichnet, dass** ein Zustand dem biometrischen Muster zugeordnet ist, wobei der Zustand mit "nicht aktiviert" initialisiert wird, **dass** die Vorrichtung dazu konfiguriert ist, den Inhaber unter Verwendung des biometrischen Musters nur dann zu authentifizieren, wenn dessen zugeordneter Zustand vorher auf "aktiviert" geändert wurde, und **dass** das Verfahren die folgenden Schritte umfasst:
- a) Versorgen der Vorrichtung mit einem Strom über einen tragbaren und beweglichen Steckverbinder (2) für Stromversorgung, wobei die Vorrichtung dazu konfiguriert ist, das Speichern als Reaktion auf die Erkennung eines spezifischen Verhaltens des Steckverbinders auszulösen,
- b) Aktivieren (E10, E10bis, A1) des biometrischen Musters (N1-N7) durch Ändern des Zustands, der dem biometrischen Muster zugeordnet ist, auf "aktiviert", wobei die Aktivierung durch die Vorrichtung als Reaktion auf oder in Verbindung mit einer erfolgreichen nichtbiometrischen Authentifizierung (260) des Inhabers erfolgt; wobei die Aktivierung (E10, E10bis, A1) bei einer elektronischen Transaktion (P2) durchgeführt wird, die eine erfolgreiche biometrische Verifizierung (210) eines frisch erfassten biometrischen Fingerabdrucks und die erfolgreiche nichtbiometrische Authentifizierung des Inhabers (260) durchführt.

2. Verfahren nach dem vorstehenden Anspruch, wobei der Steckverbinder für Stromversorgung eine Konfiguration mit einer Polarität und/oder einem Anschluss seiner Pads aufweist, die nicht ISO-7816-konform ist.

3. Verfahren nach einem der vorstehenden Ansprüche, wobei das Speichern (60) bei einer ersten Informationsaustauschsitzung (P1) zwischen der Vorrichtung und dem Steckverbinder erfolgt und wobei die Aktivierung (E10, E10bis, A1) während einer zweiten Informationsaustauschsitzung (P2) zwischen der Vorrichtung und einem Endgerät (POS, 31) erfolgt, wobei sich die zweite Sitzung von der ersten unterscheidet.

4. Verfahren nach einem der Ansprüche 2 oder 3, wobei der Steckverbinder (2) dazu konfiguriert ist, eine Spannung oder ein Signal (GND, VCC) zum Auslösen des Speicherns auf den Pads (RESET, CLK), die sich von den in ISO 7816 vorgesehenen unterscheiden, ein Rücksetzsignal, das außerhalb der in ISO 7816 festgelegten Frist ausgegeben wird, ein logisches oder analoges Signal zu transportieren.

5. Verfahren nach einem der Ansprüche 1 oder 2, wobei die Authentifizierung (260) durch die Vorrichtung erfolgt, die mit einem von einer Transaktionsdienst-Entität (POS) zugelassenen Transaktionsendgerät gekoppelt ist, oder durch eine Verarbeitungseinheit (31) des Benutzers, die eine abgesicherte Transaktionsanwendung umfasst, durch Delegation eines Transaktionsdienstservers oder einer -entität.

6. System (1A, 1B) zum Registrieren eines Inhabers der Vorrichtung (3) für biometrische Transaktionen,
wobei das System zum Durchführen eines Speicherns eines biometrischen Musters (N1-N7) in der Vorrichtung konfiguriert ist (8, 14, P20, P26),
**dadurch gekennzeichnet, dass** es umfasst:
- a) einen tragbaren Steckverbinder (2) für die Stromversorgung, der dazu konfiguriert ist (GND, VCC), der biometrischen Vorrichtung eine Stromversorgung bereitzustellen, wobei die biometrische Transaktionsvorrichtung dazu konfiguriert ist, das Speichern als Reaktion auf die Erkennung eines spezifischen Verhaltens des Steckverbinders auszulösen, wobei die Vorrichtung dazu konfiguriert ist, einen Zustand dem biometrischen Muster zuzuordnen, wobei der Zustand mit "nicht aktiviert" initialisiert wird, wobei die biometrische Transaktionsvorrichtung dazu konfiguriert ist, den Inhaber unter Verwendung des biometrischen Musters nur zu authentifizieren, wenn der ihm zugeordnete Zustand zuvor auf "aktiviert" geändert wurde,
- b) und **dadurch, dass** es dazu konfiguriert ist (P2, P21, P26), eine Aktivierung (E10, E10bis, A1) des biometrischen Musters (N1-N7) als Reaktion auf oder in Verbindung mit einer erfolgreichen nichtbiometrischen Authentifizierung (260) des Inhabers durchzuführen, wobei die Aktivierung durch Ändern des der biometrischen Einheit zugeordneten Zustands auf "aktiviert" erfolgt;
wobei die Vorrichtung einen Manager-Software-Agenten (P26) umfasst, um die folgenden Schritte durchzuführen:
- Auslösen oder Steuern der Aktivierung (E10, E10bis) des biometrischen Musters (N1-N7) bei einer Erkennung einer erfolgreichen biometrischen Verifizierung (210) eines frisch erfassten biometrischen Abdrucks und der erfolgreichen nichtbiometrischen Authentifizierung (260).

7. System nach dem vorstehenden Anspruch, wobei das System dazu konfiguriert ist, das Speichern bei einer ersten Sitzung (P1) zum Informationsaustausch (N1-N7) zwischen der Vorrichtung (3) und dem Steckverbinder und der Aktivierung (E10, E10bis, A1) bei einer zweiten Informationsaustauschsitzung (P2) zwischen der Vorrichtung und einem Laufwerk erfolgen zu lassen, wobei sich die zweite Sitzung von der ersten unterscheidet.

8. System nach dem vorstehenden Anspruch, wobei der erste elektrische Steckverbinder einen Anschluss umfasst, der das Massepad (GND) mit dem Rücksetz-Pad (RST) der Karte und das Energieversorgungspad (VCC) mit dem Taktpad (CLK) verbindet.

9. System nach einem der Ansprüche 6 bis 8, wobei die Vorrichtung (3) einen Manager-Software-Agenten (P26) umfasst, um mindestens einen Schritt der folgenden Schritte durchzuführen:
- Informieren (4) einer Transaktionsanwendung (P20), um die Transaktion mit einer PIN-Code-Authentifizierung fortzusetzen, wenn das Fehlen gespeicherter biometrischer Daten erkannt wird;
- Informieren (11) der Transaktionsanwendung, um die Transaktion mit der PIN-Code-Authentifizierung fortzusetzen, wenn gespeicherte und nicht aktivierte biometrische Daten erkannt werden;
- Steuern/Regeln (E10, E10 bis) der Aktivierung (E10, A1) der noch nicht aktivierten biometrischen Daten bei Erkennung einer erfolgreichen biometrischen Verifizierung (210) eines frisch erfassten biometrischen Abdrucks und der erfolgreichen nichtbiometrischen Authentifizierung (260).

## Claims

1. Method for enrolling a holder of a biometric transaction device (3), comprising the following step:
- storing a biometric pattern (N1-N7) in the device,
**characterized in that** a state is associated with said biometric pattern, the state being initialized to "not activated", **in that** the device is configured to authenticate the holder using said biometric pattern only if its associated state has been previously changed to "activated" and **in that** the method comprises the steps of:
- a) providing the device with a power supply by means of a portable and mobile power supply connector (2), said device being configured to trigger said storage in response to the detection of a specific behavior of the connector,
- b) activating (E10, E10bis, A1) the biometric pattern (N1-N7) by changing the state associated with the biometric pattern to "activated", said activation being carried out by the device in response to or in association with a successful non-biometric authentication (260) of the holder; said activation (E10, E10bis, A1) being carried out during an electronic transaction (P2) which implements a successful biometric verification (210) of a freshly acquired biometric fingerprint and said successful non-biometric authentication of the holder (260).

2. Method according to the preceding claim, wherein the power supply connector has a configuration with a polarity and/or connection of its contact pads that does not comply with ISO 7816.

3. Method according to either of the preceding claims, wherein said storage (60) is carried out during a first session (P1) of information exchange between the device and the connector and wherein said activation (E10, E10bis, A1) is carried out during a second session (P2) of information exchange between the device and a terminal (POS, 31), the second session being separate from the first.

4. Method according to one of claims 2 or 3, wherein said connector (2) is configured to convey a voltage or signal (GND, VCC) for triggering said storage on the contact pads (RESET, CLK), which are separate from those provided by ISO 7816, a reset signal emitted outside the time period provided by the ISO 7816 standard, a logic or analog signal.

5. Method according to one of claims 1 or 2, wherein said authentication (260) is carried out by the device coupled to a transaction terminal approved by a transaction service provider (POS), or by a processing unit (31) of the user comprising a secure transaction application, by delegation from a server or transaction service provider.

6. System (1A, 1B), for enrolling a holder of a biometric transaction device (3),
said system being configured (8, 14, P20, P26) to carry out a storage of a biometric pattern (N1-N7) in the device,
**characterized in that** it comprises:
- a) a portable power supply connector (2), which is configured (GND, VCC) to provide a power supply to the biometric transaction device, said biometric transaction device being configured to trigger said storage in response to the detection of a specific behavior of the connector, said device being configured to associate a state with the biometric pattern, the state being initialized to "not activated", the biometric transaction device being configured to authenticate the holder using said biometric pattern only if its associated state has been previously changed to "activated",
- b) and **in that** it is configured (P2, P21, P26) to carry out an activation (E10, E10bis, A1) of the biometric pattern (N1-N7) in response to or in association with a successful non-biometric authentication (260) of the holder, the activation being carried out by changing the state associated with the biometric pattern to "activated";
said device comprising a management software agent (P26) for performing the following steps:
- triggering or checking the activation (E10, E10bis) of the biometric pattern (N1-N7) upon detection of a successful biometric verification (210) of a freshly acquired biometric fingerprint and of said successful non-biometric authentication (260).

7. System according to the preceding claim, wherein the system is configured to carry out said storage during a first session (P1) of information exchange (N1-N7) between the device (3) and the connector and said activation (E10, E10bis, A1) during a second session (P2) of information exchange between the device and a reader, the second session being separate from the first.

8. System according to the preceding claim, wherein said first electrical connector comprises a connection which connects the ground contact pad (GND) to the reset contact pad (RST) of the card and the power supply contact pad (VCC) to the clock contact pad (CLK).

9. System according to one of claims 6 to 8, wherein said device (3) comprises a software agent manager (P26) for performing at least one step from the following steps:
- informing (4) a transaction application (P20) to continue the transaction with an authentication by PIN code upon detection of the absence of stored biometric data;
- informing (11) the transaction application to continue the transaction with authentication by PIN code upon detection of stored and non-activated biometric data;
- checking/controlling (E10, E10 bis) the activation (E10, A1) of biometric data that have not yet been activated upon detection of a successful biometric verification (210) of a freshly acquired biometric fingerprint and of said successful non-biometric authentication (260).
